# EUROPEAN PATENT APPLICATION

(11) **EP 1 603 290 A2**
(43) Date of publication of application: **07.12.2005**
(21) Application number: 05011916.3
(22) Date of filing: 02.06.2005
(51) Int. Cl.: H04L 12/56, H04Q 7/38

(54) **Selecting a radio access network as handover destination which allows to maintain the communication quality and call type used before the handoff**

(30) Priority: 04.06.2004 JP 2004167519; 20.10.2004 JP 2004306146
(71) Applicant: NTT DoCoMo, Inc., Tokyo (JP)
(72) Inventor: Tanabe, Akimichi c/o Intell. Property Department, 11-1, Nagatacho 2-chome Chiyoda-ku Tokyo (JP); Amada, Hiroaki c/o Intell. Property Department, 11-1, Nagatacho 2-chome Chiyoda-ku Tokyo (JP); Kakishima, Jun c/o Intell. Property Department, 11-1, Nagatacho 2-chome Chiyoda-ku Tokyo (JP); Tamura, Motoshi c/o Intell. Property Department, 11-1, Nagatacho 2-chome Chiyoda-ku Tokyo (JP)
(74) Representative: HOFFMANN EITLE

(57) **Abstract**

A handover control equipment (20) includes a handover destination determining unit (21) configured to determine a handover destination radio access system based on communication quality of a communicating communication type used in a radio access system to which a mobile terminal connects, radio resource use statuses of handover destination candidate radio access systems, and communication qualities of communication types provided by handover destination candidate radio access systems, and a handover controller (22) configured to control handover to the handover destination radio access system.

## Description

### CROSS REFERENCE TO RELATED APPLICATIONS

This application is based upon and claims the benefit of priority from prior Japanese Patent Applications No.2004-167519, filed on June 4,2004 and No.2004-306146, filed on october 20, 2004; the entire contents of which are incorporated herein by reference.

### BACKGROUND OF THE INVENTION

### 1. Field of the Invention

The present invention relates to a handover control equipment, a radio resource management equipment, a network resource management equipment, a mobile communication system, and a handover control method.

### 2. Description of the Related Art

Conventionally, within a single radio access system, handover, which is changing a base station connected by a mobile terminal is carried out when the mobile station moves. A method of maintaining communication quality before and after handover within a single radio access system has been proposed (e.g., Japanese Patent Application Laid-Open No. 2003-32725). On the other hand, in recent years, a method of carrying out a handover over different radio access systems by supporting movement of a mobile terminal on an IP level using a mobile IP has been proposed.

Meanwhile, a conventional handover method only for switching within a single radio access system could not allow handover over different radio access systems. In addition, although handover can be carried out between different radio access systems using a mobile IP, communication qualities required for respective communication types before handover cannot be maintained thereafter.

### SUMMARY OF THE INVENTION

An object of the present invention is to maintain communication quality required for a communication type used before and after handover when a handover between different radio access systems is carried out.

A handover control equipment, according to an embodiment of the present invention, includes a handover destination determining unit configured to determine a handover destination radio access system based on communication quality of a communicating communication type used in a radio access system to which a mobile terminal connects, radio resource use statuses of handover destination candidate radio access systems, and communication qualities of communication types provided by handover destination candidate radio access systems, and a handover controller configured to control handover to the handover destination radio access system.

The handover control equipment can determine a handover destination radio access system by determining whether or not handover destination candidate radio access systems can provide communication quality required for the communicating communication type used in the radio access system to which a mobile terminal connects and whether or not required radio resources for maintaining the communication quality required for the communicating communication type can be reserved, and then carry out handover.

This allows maintaining the communication quality required for the communication type used before and after handover when a handover between different radio access systems is carried out. Note that maintaining the communication quality required for the communication type used before and after handover is to maintain a communication quality equal to or greater than that before handover. In other words, maintaining the communication quality includes improving communication quality after handover than before handover. Furthermore, a communicating communication type is presently used by a mobile terminal in a radio access system to which the mobile terminal connects.

A radio resource management equipment, according to an embodiment of the present invention, includes a radio resource management unit configured to manage radio resources by at least one of providing radio resource use statuses and reserving the radio resources based on at least one of an instruction to provide the radio resource use statuses and an instruction to reserve the radio resources from a handover control equipment controlling handover between different radio access systems.

The radio resource management equipment can provide the radio resource use statuses to a handover control equipment, or reserve the required radio resources for handover based on the instruction from the handover control equipment. Accordingly, the radio resource management equipment can contribute to handover control between different radio access systems by the handover control equipment taking communication quality into consideration. Therefore, the radio resource management equipment can contribute to maintaining communication quality required for a communication type used before and after handover when a handover between different radio access systems is carried out.

A network resource management equipment, according to an embodiment of the present invention, includes a network resource management unit configured to reserve network resources in a core network required for handover to a handover destination radio access system based on an instruction to reserve the network resources from a handover control equipment controlling handover between different radio access systems.

The network resource management equipment can reserve the required network resources for handover based on the instruction from the handover control equipment. Accordingly, the network resource management equipment can contribute to handover control between different radio access systems by the handover control equipment taking communication quality into consideration. Therefore, the network resource management equipment can contribute to maintaining communication quality required for a communication type used before and after handover when a handover between different radio access systems is carried out.

A mobile communication system, according to an embodiment of the present invention, includes a handover control equipment configured to determine a handover destination radio access system based on communication quality of a communicating communication type used in a radio access system to which a mobile terminal connects, radio resource use statuses of handover destination candidate radio access systems, and communication qualities of communication types provided by the handover destination candidate radio access systems, and control handover to the handover destination radio access system, and a radio resource management equipment configured to manage radio resources by at least one of providing the radio resource use statuses and reserving the radio resources based on at least one of an instruction to provide the radio resource use statuses and an instruction to reserve the radio resources from the handover control equipment.

A handover control method, according to an embodiment of the present invention, includes determining a handover destination radio access system based on communication quality of a communicating communication type used in a radio access system to which a mobile terminal connects, radio resource use statuses of handover destination candidate radio access systems, and communication qualities of communication types provided by the handover destination candidate radio access systems, and controlling handover to the handover destination radio access system.

### BRIEF DESCRIPTION OF THE DRAWINGS

FIG. 1 is a diagram of a mobile communication system, according to a first embodiment of the present invention;
FIG 2 is a diagram of a system information database, according to the first embodiment of the present invention;
FIG. 3 is a diagram of a handover destination candidate notification, according to the first embodiment of the present invention;
FIG 4 is a diagram of a radio access system selecting method, according to the first embodiment of the present invention;
FIG. 5 is a flowchart of a handover control method, according to the first embodiment of the present invention;
FIG 6 is a diagram of a mobile communication system, according to a second embodiment of the present invention;
FIG. 7 is a flowchart of a handover control method, according to the second embodiment of the present invention;
FIG 8 is a diagram of a mobile communication system, according to a third embodiment of the present invention;
FIG 9 is a diagram of a priority database, according to the third embodiment of the present invention;
FIG 10 is a diagram of a handover destination radio access system determining method, according to the third embodiment of the present invention;
FIG. 11 is a flowchart of a handover control method, according to the third embodiment of the present invention;
FIG. 12 is a diagram of a mobile communication system, according to a fourth embodiment of the present invention;
FIG. 13 is a flowchart of a handover control method, according to the fourth embodiment of the present invention;
FIG 14 is a diagram of a mobile communication system, according to a fifth embodiment of the present invention;
FIG. 15 is a flowchart of a handover control method, according to the fifth embodiment of the present invention;
FIG 16 is a diagram of a mobile communication system, according to a sixth embodiment of the present invention;
FIG 17 is a diagram of a mobile communication system, according to a seventh embodiment of the present invention;
FIG. 18 is a diagram of a mobile communication system, according to an eighth embodiment of the present invention; and
FIG. 19 is a flowchart of a handover control method, according to the eighth embodiment of the present invention.

### DESCRIPTION OF THE PREFERRED EMBODIMENTS

### (First Embodiment)

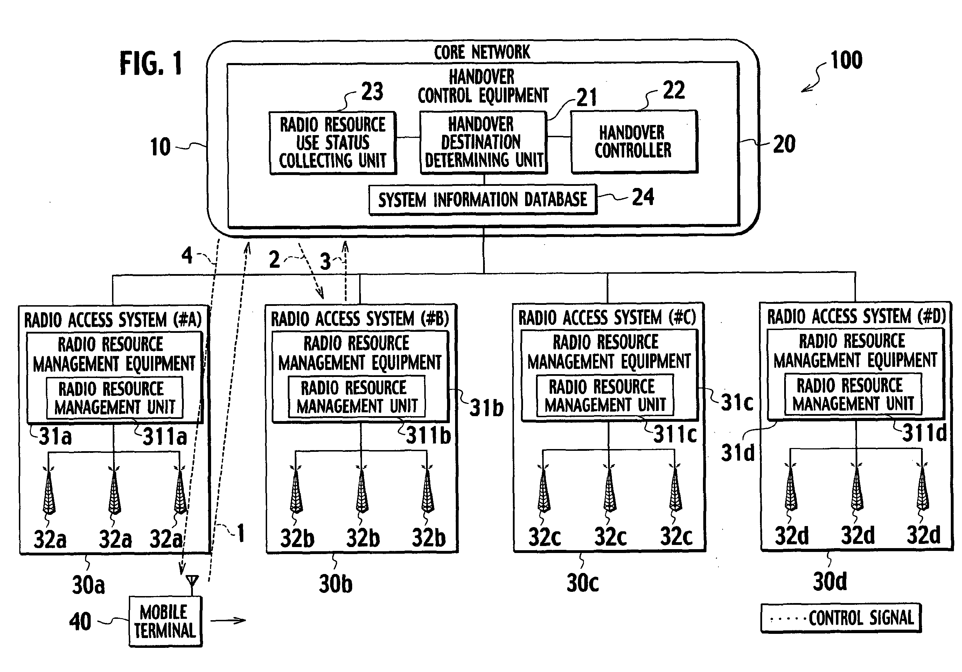

As shown in FIG. 1, a mobile communication system 100 includes a handover control equipment 20, a plurality of radio access systems (#A) 30a, (#B) 30b, (#C) 30c, and (#D) 30d, and a mobile terminal 40.

Handover is carried out over different radio access systems under control of the handover control equipment 20 when the mobile terminal 40 moves. The radio access systems (#A) 30a, (#B) 30b, (#C) 30c, and (#D) 30d connect a core network 10 and the mobile terminal 40 by connecting to the mobile terminal 40 via a radio link. These radio access systems may be a radio access system using wideband code division multiple access (W-CDMA), a radio access system using radio LAN, a radio access system using orthogonal frequency division multiplexing (OFDM), and a radio access system using a personal handy phone system (PHS), for example.

The radio access systems (#A) 30a, (#B) 30b, (#C) 30c, and (#D) 30d include radio resource management equipments 31a, 31b, 31c, and 31d, and multiple base stations 32a, 32b, 32c, and 32d, respectively. As described above, the radio resource management equipments 31a, 31b, 31c, and 31d are provided in the radio access systems (#A) 30a, (#B) 30b, (#C) 30c, and (#D) 30d, respectively.

The radio resource management equipments 31a, 31b, 31c, and 31d manage radio resources by at least one of providing the radio resource use statuses and reserving the radio resources. The radio resource management equipments 31a, 31b, 31c, and 31d provide to the handover control equipment 20 the radio resource use statuses of the radio access systems (#A) 30a, (#B) 30b, (#C) 30c, and (#D) 30d, which are managed by the radio resource management equipments 31a, 31b, 31c, and 31d respectively, based on an instruction to provide the radio resource use statuses from the handover control equipment 20, The radio resource management equipments 31a, 31b, 31c, and 31d reserve the radio resources of the radio access systems (#A) 30a, (#B) 30b, (#C) 30c, and (#D) 30d respectively, based on an instruction to reserve the radio resources from the handover control equipment 20.

The radio resource management equipments 31a, 31b, 31c, and 31d include radio resource management units 311a, 311b, 311c, and 311d respectively. The radio resource management units 311a, 311b, 311c, and 311d manage radio resources by at least one of providing radio resource use statuses and reserving the radio resources based on at least one of an instruction to provide the radio resource use statuses and an instruction to reserve the radio resources from the handover control equipment 20.

The radio resource management units 311a, 311b, 311c, and 311d receive respective radio resource use statuses from the respective base stations 32a, 32b, 32c, and 32d. The radio resource management units 311a, 311b, 311c, and 311d may periodically receive radio resource use statuses such as available resources, or may receive them based on the instruction from the handover control equipment 20. When the radio resource management units 311a, 311b, 311c, and 311d receive the instruction to provide radio resource use statuses from the handover control equipment 20, the radio resource management units 311a, 311b, 311c, and 311d provide to the handover control equipment 20 the radio resource use statuses received from the respective base stations 32a, 32b, 32c, and 32d.

These radio resources may be frequency bandwidths, time slots, radio channels or the like. These use statuses may be quantity of used radio resources or available radio resources (available statuses).

When the radio resource management units 311a, 311b, 311c, and 311d receive the instruction to reserve required radio resources from the handover control equipment 20, the radio resource management units 311a, 311b, 311c, and 311d reserve radio resources in the respective base stations 32a, 32b, 32c, and 32d. The radio resource management units 311a, 311b, 311c, and 311d provide to the handover control equipment 20 a reservation result notification 3 that indicates whether or not the instructed radio resources can be reserved.

The handover control equipment 20 controls handover between different radio access systems. The handover control equipment 20 is provided in the core network 10. The handover control equipment 20 includes a handover destination determining unit 21, a handover controller 22, a radio resource use status collecting unit 23, and a system information database 24.

The system information database 24 stores system information relating to radio access systems. The system information may be communication quality of communication types that can be provided by radio access systems, required radio resources that is quantity of radio resources required for maintaining the communication quality, and fees. The communication types may be, for example, voice call, packet communication, moving image communication and the like. The communication quality may be transmission rate, error rate, allowable delay, packet loss rate, delay variation and the like.

The system information database 24 stores communication qualities and required radio resources for each radio access system and for each communication type. The communication quality for each radio access system and for each communication type may be represented with, for example, communication quality design value (hereafter, referred to as 'quality design value') for each communication type designed in each radio access system. Note that significant communication quality types for respective communication types are different from one another. For example, allowable delay is significant for voice calls, and packet loss rate is significant for packet communication. Therefore, the communication quality types for respective radio access systems and for respective communication types, which are stored in the system information database 24, may differ from one another. In addition, there may be one or a plurality of communication quality types for respective radio access systems and for respective communication types, which can be stored in the system information database 24.

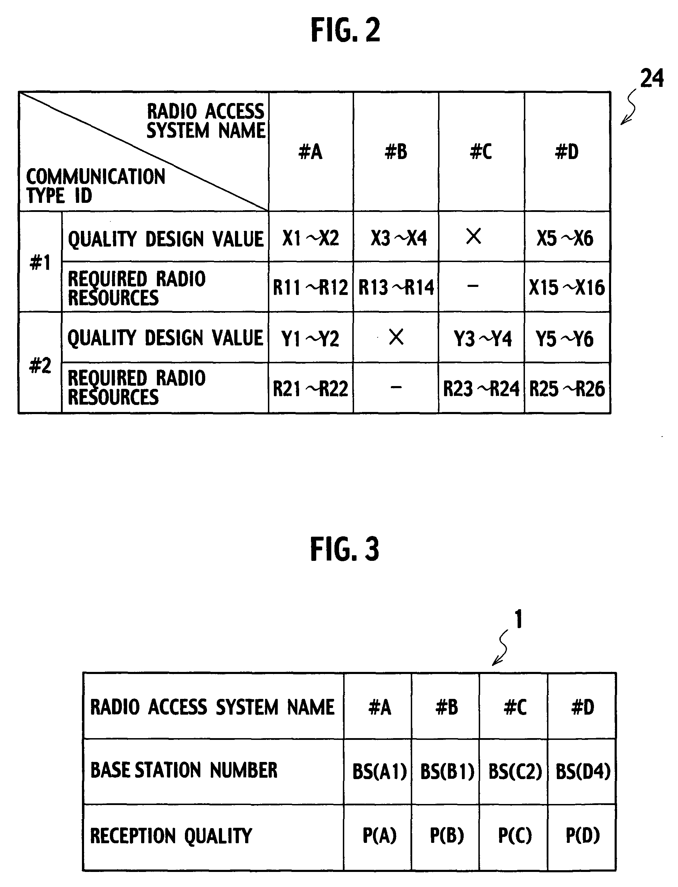

FIG 2 shows an example of the system information database 24. A radio access system name is radio access system identification information. A radio access system ID or the like may be used as the radio access system identification information. A communication type ID is communication type identification information. According to this embodiment, a communication type ID '#1' indicates voice calls while a communication type ID '#2' indicates packet communication. A symbol '×' indicates that the access system corresponding to that symbol does not support the communication type corresponding to the same.

The system information database 24 shown in FIG 2 stores, for example, such system information as a quality design value of voice calls of the communication type ID '#1' for the radio access system (#A) 30a being 'X1 to X2', and required radio resources being 'R11 and R12', and such system information as the radio access system (#B) 30b does not support packet communication of the communication type ID '#2'. The system information database 24 shown in FIG. 2 stores required radio resources for a single communication quality for each radio access system and for each communication type. Alternatively, it may be stores required radio resources for a plurality of communication qualities, for respective radio access systems, and for respective communication types.

The handover destination determining unit 21 determines a handover destination radio access system based on the communication quality of a communicating communication type used in a radio access system to which the mobile terminal 40 connects (hereafter, referred to as 'connecting system'), the radio resource use statuses of handover destination candidate radio access systems, and communication qualities of communication types provided by the handover destination candidate radio access systems.

The handover destination determining unit 21 receives from the mobile terminal 40 a notification of handover destination candidate radio access systems (hereafter, referred to as 'handover destination candidate notification'). A handover destination candidate notification 1 from the mobile terminal 40 triggers handover. Reception of the handover destination candidate notification 1 allows the handover destination determining unit 21 to recognize the fact that the mobile terminal 40 requires handover. Handover destination candidate radio access systems are radio access systems including base stations from which the mobile terminal 40 can receive radio waves. In other words, Handover destination candidate radio access systems are radio access systems including base stations to which the mobile terminal 40 can connect. Therefore, a connecting system may be included in a handover destination candidate. The mobile terminal 40 receives radio waves from respective base stations 32a, 32b, 32c, and 32d, detects a base station to which the mobile terminal 40 can connect, and transmits the handover destination candidate notification 1.

The handover destination candidate notification 1 includes information indicating handover destination candidates, communicating communication type which is presently used in the connecting system by the mobile terminal 40, and identification information of the mobile terminal 40. Information indicating handover destination candidates includes identification information of handover destination candidate radio access systems, identification information of base stations to which the mobile terminal 40 can connect, and information of reception quality of radio waves received from the base station by the mobile terminal 40 related to each other. The base station identification information includes base station numbers. The mobile terminal 40 identification information includes user IDs and mobile terminal numbers. The handover destination determining unit 21 can receive the handover destination candidate notification 1 including information of handover destination candidates as shown in FIG 3. The information of handover destination candidates includes a radio access system name, the base station number of a base station to which the mobile terminal 40 can connect, and reception quality of radio waves from the base station related to each other.

The handover destination determining unit 21 stores a reception quality threshold for handover destination candidate. The handover destination determining unit 21 then compares reception quality included in the handover destination candidate notification 1 with the reception quality threshold. The handover destination determining unit 21 determines a radio access system having reception quality equal to or greater than the reception quality threshold as a handover destination candidate. For example, in the case of FIG. 3, the handover destination determining unit 21 compares the reception quality threshold with each of reception qualities P(A), P(B), P(C), and P(D), and determines the radio access systems (#A) 30a, (#B) 30b, and (#C) 30c as handover destination candidates for the mobile terminal 40 when the reception qualities P(A), P(B), and P(C) are equal to or greater than the reception quality threshold. A case of the radio access systems (#A) 30a, (#B) 30b, and (#C) 30c being determined as handover destination candidates is described below as an example.

The handover destination determining unit 21 instructs the radio resource use status collecting unit 23 to collect radio resource use statuses of handover destination candidate radio access systems. The handover destination determining unit 21 then acquires radio resource use statuses of the handover destination candidate radio access systems from the radio resource use status collecting unit 23. In addition, the handover destination determining unit 21 acquires system information of handover destination candidate radio access systems from the system information database 24.

The handover destination determining unit 21 first selects a radio access system capable of providing a communication quality required for the communicating communication type which is presently used in the connecting system by the mobile terminal 40 based on a quality design value in the system information from the handover destination candidate radio access systems. Hereafter, a radio access system that is capable of providing a communication quality required for the communicating communication type presently used in the connecting system and that is selected from handover destination candidates based on the quality design value is referred to as an 'available system'.

The handover destination determining unit 21 stores lower limit communication qualities minimally required for respective communication types (hereafter, referred to as 'minimum quality') and a target communication quality (hereafter, referred to as 'target quality'). Communication quality which allows the mobile terminal 40 to provide smooth communication may be designated as the target quality. The handover destination determining unit 21 may select a radio access system capable of providing at least minimum quality, or a radio access system capable of providing a communication quality equal to or greater than that provided from a connecting system, as an available system.

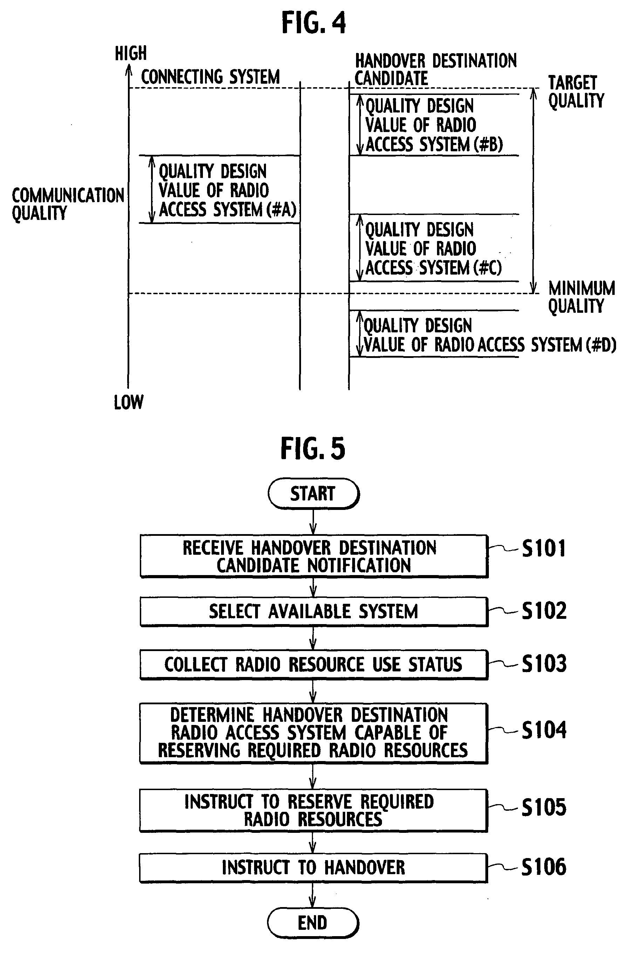

For example, as shown in FIG. 4, a case of a connecting system being the radio access system (#A) 30a, and the handover destination candidates being the radio access systems (#B) 30b, (#C) 30c, and (#D) 30d is described. In FIG 4, the vertical axis represents communication quality, and target quality and minimum quality represent those required for the communicating communication type presently used by the mobile terminal 40. Note that the communication quality represented by the vertical axis may be error rate, allowable delay, packet loss rate, delay variations, or the like. The quality design values for respective radio access systems depend on communication type.

The handover destination determining unit 21 can select the radio access systems (#B) 30b and (#C) 30c having a quality design value equal to or greater than the minimum quality shown in FIG. 4 when selecting radio access systems capable of at least providing minimum quality. In addition, the handover determining unit 21 can select the radio access system (#B) 30b having a quality design value equal to or greater than that of the radio access system (#A) 30a when selecting a radio access system capable of providing a communication quality equal to or greater than that of the connecting system.

For example, when a connecting system is a radio access system providing packet communication using W-CDMA, the handover destination determining unit 21 may select a radio access system providing packet communication via radio LAN as an available system for utilizing higher-speed packet communication. Note that the handover destination determining unit 21 may determine whether to select a radio access system capable of at least providing minimum quality or to select a radio access system capable of providing a communication quality equal to or greater than that of a connecting system based on the handover destination candidate notification including a specification provided by the mobile terminal 40, or a predetermined way at the handover destination determining unit 21.

The handover destination determining unit 21 then determines the handover destination radio access system based on the radio resource use statuses. The handover destination determining unit 21 determines a radio access system capable of reserving the required radio resources for maintaining a communication quality required for the communicating communication type which is presently used in the connecting system as the handover destination radio access system from available systems based on the collected radio resource use statuses and required radio resources of the handover destination candidate radio access systems.

For example, when the handover destination determining unit 21 selects the radio access system (#B) 30b and (#C) 30c as available systems, the handover destination determining unit 21 compare radio resource use statuses of the radio access system (#B) 30b and (#C) 30c with required radio resources, respectively. When the handover destination determining unit 21 determines based on the comparison results. For example, the handover destination determining unit 21 determines the radio access system (#C) 30c as a handover destination radio access system, in the case where only the radio access system (#C) 30c can reserve required radio resources, The handover destination determining unit 21 notifies the handover controller 22 of the determined radio access system associated with the handover destination candidate notification.

Note that when there is a plurality of radio access systems capable of reserving required radio resources, the handover destination determining unit 21 may determine an arbitrary radio access system therefrom as a handover destination, may determine a radio access system capable of providing the highest communication quality, or may determine a radio access system having the most available radio resource use status as a handover destination. On the other hand, when there are no radio access systems capable of reserving required radio resources, the handover destination determining unit 21 may determine a handover destination again after having waited for a predetermined period, or may notify the mobile terminal 40 that there are no handover destinations capable of maintaining communication quality.

In addition, the handover destination determining unit 21 may determine a handover destination with consideration of a plurality of communication qualities. For example, when the communication type is moving image communication, it is assumed that an allowable delay and a packet loss rate are designated as quality design values, In this case, the handover destination determining unit 21 selects a radio access system capable of providing both the allowable delay and the packet loss rate required for presently used moving image communication as an available system. The handover destination determining unit 21 then can select a radio access system capable of reserving the greater of two: required radio resources for maintaining the allowable delay in the presently used moving image communication and required radio resources for maintaining the packet loss rate as a handover destination radio access system from available systems.

The radio resource use status collecting unit 23 collects radio resource use statuses by instructing the handover destination candidate radio access systems to provide the radio resource use statuses.

The radio resource use status collecting unit 23 then receives an instruction from the handover destination determining unit 21 to collect radio resource use statuses of the respective handover destination candidate radio access systems.

The radio resource use status collecting unit 23 collects radio resource use statuses by instructing the handover destination candidate radio access systems to provide the radio resource use statuses. The radio resource use status collecting unit 23 receives an instruction to collect radio resource use statuses of handover destination candidate radio access systems from the handover destination determining unit 21.

The radio resource use status collecting unit 23 instructs the radio resource management equipments 31a, 31b, 31c, and 31d in the respective handover destination candidate radio access systems to provide respective radio resource use statuses by transmitting an instruction to provide radio resource use statuses. The radio resource use status collecting unit 23 receives radio resource use statuses of respective base stations 32a, 32b, 32c, and 32d from the respective radio resource management equipments 31a, 31b, 31c, and 31d as radio resource use statuses of respective radio access systems. The radio resource use status collecting unit 23 inputs the received radio resource use statuses to the handover destination determining unit 21.

The handover controller 22 controls handover to the determined handover destination radio access system. The handover controller 22 receives a notification of the determined handover destination radio access system associated with the handover destination candidate notification from the handover destination determining unit 21. The handover controller 22 first instructs the determined handover destination radio access system to reserve required radio resources.

The handover controller 22 transmits an instruction 2 to reserve required radio resources to the radio resource management equipment in the determined handover destination radio access system. The handover controller 22 then receives reservation result notification 3 from the radio resource management equipment. When the reservation result notification indicates that required radio resources are reserved, the handover controller 22 instructs to hand over to the determined handover destination radio access system by transmitting a switch instruction 4 to at least one of the mobile terminal 40, base stations and radio resource management equipments which are in the handover destination radio access systems. As a result, since the handover control equipment 20 controls so as to hand over after reservation of the required radio resources, communication quality can be reliably maintained.

More specifically, the handover controller 22 acquires identification information of a base station to which the mobile terminal 40 can connect and identification information of the mobile terminal 40 from the handover destination candidate notification. When instructing the mobile terminal 40, the handover controller 22 specifies the identification information of the base station to which the mobile terminal 40 can connect in the determined handover destination radio access system, and instructs the mobile terminal 40 to hand over to that base station. When instructing the base stations or radio resource management equipments, the handover controller 22 indicates the mobile terminal 40 identification information to the base station to which the mobile terminal 40 can connect in the determined handover destination radio access system, and instructs the base stations or radio resource management equipments to handover the mobile terminal 40 to the radio access system. In this manner, the handover controller 22 controls handover to the determined handover destination radio access system.

Note that the handover destination candidate notification 1, the instruction 2 to reserve required radio resources, the reservation result notification 3, the switch instruction 4 and the like are transmitted and received as control signal indicated by respective dashed lines in FIG. 1.

Next, a handover control method in a mobile communication system 100 is described using FIG 5. The handover control equipment 20 receives a handover destination candidate notification 1 from the mobile terminal 40 (S101). The handover control equipment 20 selects an available system using system information based on communication quality of a communicating communication type which is presently used by the mobile terminal 40 in a connecting system and communication quality of a communication type provided by the handover destination candidate radio access systems (S102).

The handover control equipment 20 collects radio resource use statuses of the respective handover destination candidate radio access systems based on the handover destination candidate notification (S 103). The handover control equipment 20 determines a radio access system capable of reserving required radio resources for the communicating communication type as a handover destination radio access system from the available systems based on the radio resource use statuses of the handover destination candidate radio access systems (S104).

The handover control equipment 20 instructs a radio resource management equipment in the determined handover destination radio access system to reserve required radio resources (S105). Upon reception of a reservation result notification from the radio resource management equipment in the handover destination radio access system indicating that required radio resources can be reserved, the handover control equipment 20 instructs at least one of the mobile terminal 40, a base station and a radio resource device which are in the handover destination radio access system to hand over to the determined handover destination radio access system (S106). Note that the steps (S101) and (S102) may be carried out in reverse order.

According to the mobile communication system 100, the handover control equipment 20, the multiple radio access systems (#A) 30a, (#B) 30b, (#C) 30c, and (#D) 30d, and the handover control method, the handover control equipment 20 can determine a handover destination radio access system by determining whether or not handover destination candidate radio access systems can provide a communication quality required for a communicating communication type which is presently used by the mobile terminal 40 in the connecting system and whether or not a required radio resources for maintaining the communication quality of the communicating communication type can be reserved, and then carry out handover.

This allows maintaining the communication quality required for the communication type used before and after handover when a handover between different radio access systems is carried out. In other words, this allows maintaining a communication quality equal to or greater than that before handover. Therefore, handover control for handover between different radio access systems taking post-handover communication quality into consideration can provide a favorable communication status to the mobile terminal 40.

In addition, the handover control equipment 20 includes the radio resource use status collecting unit 23, which instructs the handover destination candidate radio access systems to provide radio resource use statuses, and thereby collecting the radio resource use statuses. The handover destination determining unit 21 then determines a handover destination radio access system using the collected radio resource use statuses. Therefore, the handover control equipment 20 collects radio resource use statuses of handover destination candidate radio access systems, and may determine a handover destination radio access system using and considering the collected use statuses. In other words, the handover control equipment 20 may determine a handover destination by confirming the radio resource use statuses of the multiple handover destination candidates.

In addition, the radio resource management equipments 31a, 31b, 31c, and 31d provided in the respective radio access systems (#A) 30a, (#B) 30b, (#C) 30c, and (#D) 30d may provide the radio resource use statuses to the handover control equipment 20, and reserve the required radio resources for handover based on the instruction from the handover control equipment 20. Accordingly, the radio resource management equipments 31a, 31b, 31c, and 31d may contribute to handover control between different radio access systems by the handover control equipment 20 taking communication quality into consideration. Therefore, the radio resource management equipments 31a, 31b, 31c, and 31d may contribute to maintaining communication quality required for a communication type used before and after handover when a handover between different radio access systems is carried out.

### (Second Embodiment)

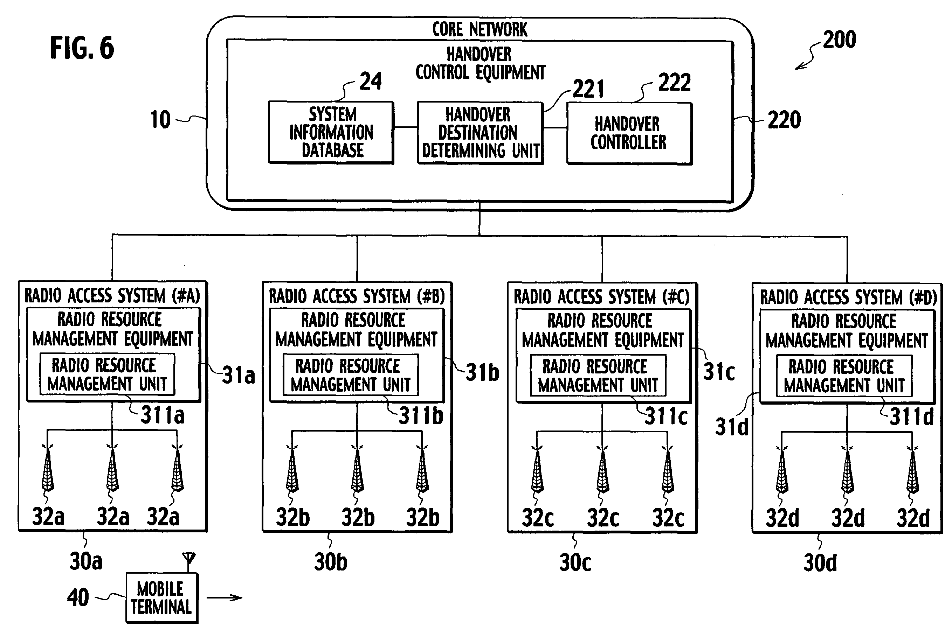

As shown in FIG 6, a mobile communication system 200 includes a handover control equipment 220, a plurality of radio access systems (#A) 30a, (B) 30b, (#C) 30c, and (#D) 30d, and a mobile terminal 40. The handover control equipment 220 includes a handover destination determining unit 221, a handover controller 222, and a system information database 24. In FIG 6, the same reference numerals are given to the substantially same parts as those of the mobile communication system 100 shown in FIG 1, and repetitive descriptions thereof are thus omitted.

The handover destination determining unit 221 selects available systems in the same manner as the handover destination determining unit 21 shown in FIG. 1. When there is a single available system, the handover destination determining unit 221 determines that radio access system as a handover destination. When there are multiple available systems, the handover destination determining unit 221 may determine an arbitrary radio access system as a handover destination radio access system therefrom, or may determine a radio access system capable of providing the highest communication quality as a handover destination radio access system therefrom. Hereafter, a handover destination radio access system which is first determined by the handover destination determining unit 221 is referred to as a 'first handover destination'. The handover destination determining unit 221 notifies the handover controller 222 of a first handover destination associated with a handover destination candidate notification.

The handover controller 222 receives the notification of the first handover destination associated with the handover destination candidate notification from the handover destination determining unit 221. The handover controller 222 first instructs the first handover destination to reserve required radio resources for the communication quality of the communicating communication type in the same manner as the handover controller 22 shown in FIG 1. The handover controller 222 then receives reservation result notification from the radio resource management equipment in the first destination.

When the reservation result notification indicates that required radio resources can be reserved, the handover controller 222 controls handover to the first handover destination by instructing at least one of the mobile terminal 40, the base station and the radio resource management equipment which are in the first handover destination to handover to the first handover destination. On the other hand, when the reservation result notification indicates that required radio resources cannot be reserved, the handover controller 222 notifies the handover destination determining unit 221 of failure of a reservation.

When receiving the failure of a reservation, i.e., the notification that the reservation is impossible, the handover destination determining unit 221 determines the handover destination radio access system again. In other words, the handover destination determining unit 221 selects another handover destination radio access system. When there are multiple available systems, the handover destination determining unit 221 selects another handover destination from the available systems which have not yet been selected as the first handover destination. In this case, the handover destination determining unit 221 may select an arbitrary radio access system therefrom as a handover destination, or may select a radio access system capable of providing the highest communication quality therefrom as a handover destination.

On the other hand, when there is only a single available system, the handover destination determining unit 221 may notify the mobile terminal 40 that there are no handover destinations capable of maintaining communication quality, or may determine the first handover destination as a handover destination radio access system again after having waited for a predetermined period. Hereafter, a handover destination radio access system which has been selected again by the handover destination determining unit 221 is referred to as a 'second handover destination'. The handover destination determining unit 221 notifies the handover controller 222 of the second handover destination associated with the handover destination candidate notification.

The handover controller 222 instructs the second handover destination to reserve required radio resources, and receives reservation result notifications from the radio resource management equipment in the second handover destination. In this manner, the handover controller 222 also reserves required radio resources again. When the reservation result notification indicates that required radio resources can be reserved, the handover controller 222 controls to hand over to the second handover destination.

On the other hand, when required radio resources cannot be reserved, the handover controller 222 notifies the handover destination determining unit 221 of failure of a reservation again. The handover destination determining unit 221 determines a handover destination radio access system a predetermined number of times or for a predetermined period. When the required radio resources cannot be reserved even when the predetermined number of times has passed or the predetermined period has elapsed, the handover destination determining unit 221 may notify the mobile terminal 40 that there is no handover destination capable of maintaining communication quality. Alternatively, the handover destination determining unit 221 may notify the mobile terminal 40 that there is no handover destination capable of maintaining communication quality at the point when there are no more available systems. Note that other than the above processing, the handover destination determining unit 221 and the handover controller 222 operate in substantially the same manner as the handover destination determining unit 21 and the handover controller 22 shown in FIG 1.

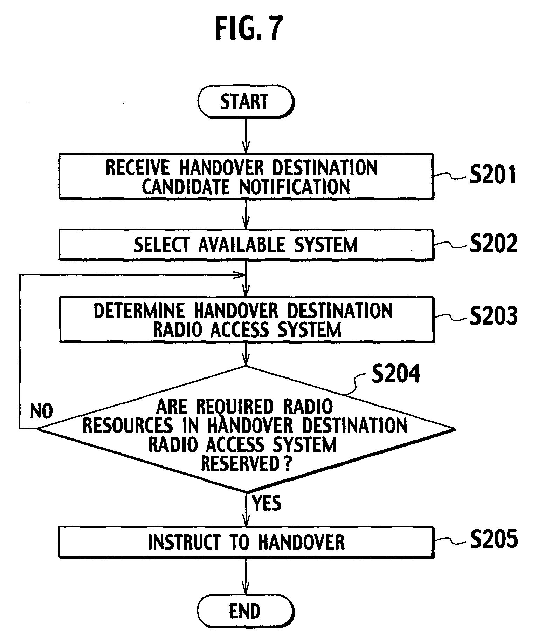

Next, a handover control method in a mobile communication system 200 is described using FIG. 7. The handover control equipment 220 carries out processing in steps (S201) and (S202) in the same manner as the processing in steps (S101) and (S102) shown in FIG 5. The handover control equipment 220 selects a handover destination radio access system i.e., the first handover destination from available systems (S203).

The handover control equipment 220 instructs the radio resource management equipment, which manages radio resources in the determined first handover destination, to reserve required radio resources. The handover control equipment 220 then receives a reservation result notification from the radio resource management equipment in the first handover destination, and determines whether or not the required radio resources can be reserved (S204). In step (S204), when the required radio resources can be reserved, the handover control equipment 220 instructs at least one of the mobile terminal 40, the base station and the radio resource management equipment which are in the first handover destination handover to the first handover destination (S205).

On the other hand, when required radio resources cannot be reserved in step (S204), the handover control equipment 220 returns to step (S203) and selects the handover destination radio access system i.e., the second handover destination again. The handover control equipment 220 selects the second handover destination from available systems based on the result that required radio resources cannot be reserved in the first handover destination under the current radio resource use status. Processing then proceeds to step (5204) again, in which the handover control equipment 220 then attempts to reserve required radio resources in the second handover destination.

According to the mobile communication system 200, the handover control equipment 220, and the handover control method, the following effects can be obtained in addition to the effects obtained by the mobile communication system 100, the handover control equipment 20, and using the handover control method shown in FIGS. 1 and 5.

The handover controller 222 instructs the radio resource management equipment in the determined handover destination radio access system to reserve radio resources necessary for communication quality of the communicating communication type presently used by the mobile terminal 40. When the required radio resources can be reserved, the handover controller 222 controls to hand over to the handover destination radio access system. Otherwise, when those cannot be reserved, the radio resource management equipment notifies the handover destination determining unit 221 of failure of a reservation. In other words, the radio resource management equipment notifies the handover destination determining unit 221 that the required radio resources cannot be reserved. When receiving the failure of a reservation, the handover destination determining unit 221 determines the handover destination radio access system again.

Therefore, the handover control equipment 220 may determine the handover destination radio access system based on the result that: the handover destination radio access system was determined; reservation of required radio resources was then instructed; however, the required radio resources could not be reserved. In other words, the handover control equipment 220 determines the handover destination radio access system based on the result that the required radio resources cannot be reserved under the current radio resource use status. In addition, the handover control equipment 220 may control such that handover is carried out after reservation of the required radio resources. This allows maintaining communication quality further reliably.

Note that as described in the first and the second embodiment, the handover destination determining unit may use the radio resource use statuses at any time to select a handover destination radio access system; wherein usage thereof is not limited. In other words, the handover destination determining unit may use the collected radio resource use statuses from the beginning for selection, or may use the result that required radio resources cannot be reserved under the current radio resource use status for the same.

### (Third Embodiment)

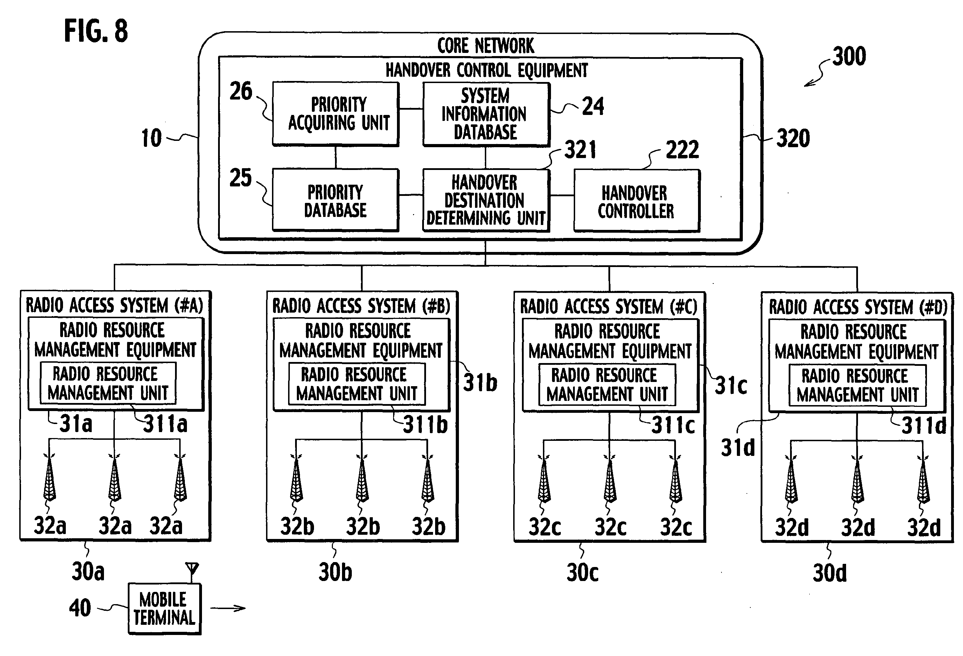

As shown in FIG 8, a mobile communication system 300 includes a handover control equipment 320, a plurality of radio access systems (#A) 30a, (B) 30b, (#C) 30c, and (#D) 30d, and a mobile terminal 40. The handover control equipment 320 includes a handover destination determining unit 321, a handover controller 222, a system information database 24, a priority database 25, and a priority acquiring unit 26. In FIG 8, the same reference numerals are given to substantially the same parts as those of the mobile communication systems 100 and 200 shown in FIGS. 1 and 6, and repetitive descriptions thereof are thus omitted.

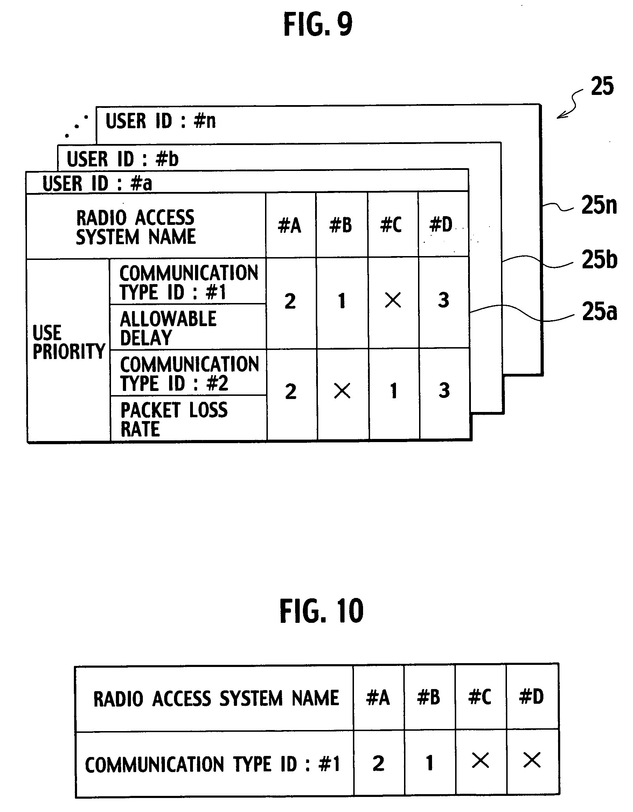

The priority database 25 stores use priorities of radio access system for respective communication types specified by a mobile terminal user. The priority database 25 stores use priorities for respective mobile terminal users, and for respective communication types. In addition, the priority database 25 may store criteria for setting use priorities by mobile terminal users. FIG. 9 shows an example of the priority database 25. The priority database 25 stores the use priorities for respective communication types and the criteria for setting the use priorities, which are linked to identification information such as a user ID for the mobile terminal 40. More specifically, the priority database 25 stores a plurality of priority tables 25a to 25n for respective users associated with user IDs.

The priority tables 25a to 25n store use priorities for respective communication types. Note that a symbol '×' indicates that the corresponding access system does not support the corresponding communication type. The priority database 25 shown in FIG 9 stores use priorities regarding the mobile terminal 40 with a user ID '#a' and a communication type ID '#1', wherein the radio access system (#B) is ranked first, the radio access system (#A) is ranked second, and the radio access system (#D) is ranked third. In addition, the priority database 25 stores the criteria used by the mobile terminal user with the user ID '#a', where the criteria include 'allowable delay' for the communication type ID '#1' and 'packet loss rate' for a communication type ID '#2'.

The priority acquiring unit 26 acquires the use priorities and criteria for radio access systems for respective communication types specified by the mobile terminal user from the mobile terminal 40. The priority acquiring unit 26 stores the acquired use priorities in the priority database 25. The mobile terminal user may specify use priorities for the radio access systems based on quality design value and fee. Note that the priority acquiring unit 26 may acquire use priorities, which are specified by the mobile terminal user upon contract, from an external input by a communication carrier.

The priority acquiring unit 26 accesses the system information database 24, and prevents storage of use priorities for communication types not supported by radio access systems in the priority database 25 even when the mobile terminal 40 user specifies the use priorities. When an undefined use priority level develops due to that prevention, the priority acquiring unit 26 moves up use priorities. For example, in the case of the priority database 25 shown in FIG 9, the priority acquiring unit 26 stores the symbol '×' for the communication types not supported by the radio access systems, and moves up use priorities. In addition, the priority acquiring unit 26 acquires system information from the system information database 24, and may provide it to the mobile terminal 40 as a reference for the mobile terminal user to specify use priorities.

The handover destination determining unit 321 determines the handover destination radio access system based on use priorities of radio access systems for respective communication types specified by a mobile terminal user. First, the handover destination determining unit 321 selects an available system in the same manner as the handover destination determining unit 21 shown in FIG. 1. The handover destination determining unit 321 then selects a handover destination radio access system i.e., the first handover destination from available systems based on the use priorities. The handover destination determining unit 321 can select a radio access system having the highest use priority for a communicating communication type presently used in a connecting system from available systems as the first handover destination. The handover destination determining unit 321 acquires identification information of the mobile terminal 40 from a handover destination candidate notification. The handover destination determining unit 321 acquires the use priority of the mobile terminal user from the priority database 25 based on the identification information of the mobile terminal 40 and then uses it for determining a handover destination radio access system.

For example, in a case where: the handover destination candidate notification includes information shown in FIG. 3, a user ID '#a', and a communication type ID '#1' that indicates a communicating communication type presently used; the system information database 24 includes system information shown in FIG. 2; and the priority database 25 stores use priorities shown in FIG 9, the handover destination determining unit 321 selects the radio access systems (#A) 30a and (#B) 30b as available systems as shown in FIG 10. In addition, the handover destination determining unit 321 determines the radio access system (#B) 30b having first use priority for the communication type ID '#1' specified by the mobile terminal user having the user ID '#a' as the first handover destination.

Note that when there is a single available system, the handover destination determining unit 321 determines the radio access system as the first handover destination. The handover destination determining unit 321 notifies the handover controller 222 of the first handover destination associated with the handover destination candidate notification.

When the handover destination determining unit 321 receives failure of a reservation which is a notification that a reservation is impossible from the handover controller 222, the handover destination determining unit 321 selects the handover destination radio access system again. The handover destination determining unit 321 selects a radio access system having second use priority following the first handover destination in the communicating communication type presently used by the mobile terminal 40 from available systems as the second handover destination. For example, in the case of FIG 10, the handover destination determining unit 321 determines as the second handover destination the radio access system (#A) 30a having the second use priority for the communication type ID '#1' specified by mobile terminal user having the user ID '#a'. The handover destination determining unit 321 notifies the handover controller 222 of the second handover destination associated with the handover destination candidate notification.

Note that when there is only a single available system, the handover destination determining unit 321 may carry out the same processing as the handover destination determining unit 221 shown in FIG. 6. In addition, when receiving failure of a reservation again from the handover controller 222, the handover destination determining unit 321 may carry out the same processing as the handover destination determining unit 221 shown in FIG 6. Other than the above processing, the handover destination determining unit 321 operates in substantially the same manner as the handover destination determining unit 21 shown in FIG 1.

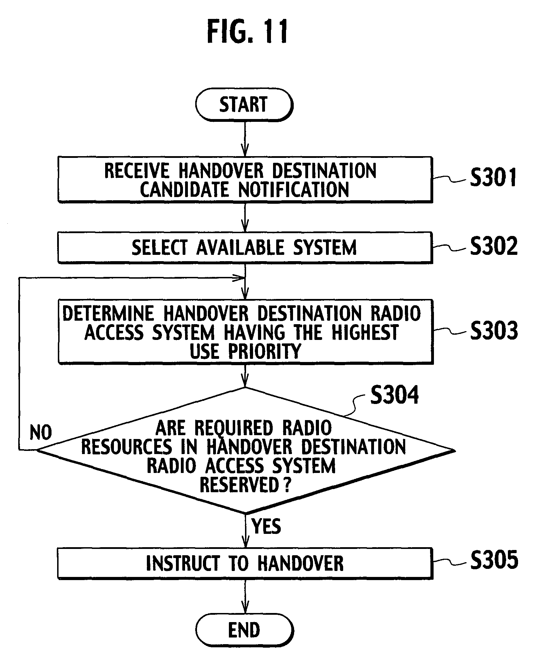

Next, a handover control method for a mobile communication system 300 is described using FIG 11. The handover control equipment 320 carries out processing in steps (S301) and (S302) in the same manner as the processing in steps (S101) and (S102) shown in FIG 5. The handover destination determining unit 320 selects as the first handover destination a radio access system having the highest use priority for a communicating communication type presently used in the connecting system from available systems (S303),

The handover control equipment 320 carries out processing in steps (S304) and (S305) in the same manner as the processing in steps (S204) and (S205) shown in FIG 7. In step (S304), when required radio resources cannot be reserved, processing returns to step (S303), in which the handover control equipment 320 then selects a radio access system having the second use priority following the first handover destination in the communicating communication type presently used by the mobile terminal 40 from available systems based on the result that the required radio resources cannot be reserved in the first handover destination under the current radio resource use statuses. Processing then proceeds to step (S304) again, in which the handover control equipment 320 attempts to reserve required radio resources in the second handover destination.

According to the mobile communication system 300, the handover control equipment 320, and the handover control method, the following effects can be obtained in addition to the effects obtained from the mobile communication systems 100 and 200, the handover control equipments 20 and 220, and the handover control method shown in FIGS. 1 and 5 through 7. The handover control equipment 320 may determine a handover destination radio access system with consideration of use priorities for respective communication types desired by the mobile terminal user. Therefore, it is possible to provide a favorable communication status to the mobile terminal 40 by using a desired radio access system by mobile terminal user.

In addition, the handover control equipment 320 includes the priority database 25 storing use priorities specified by mobile terminal user. Then, the handover destination determining unit 321 can acquires use priorities of respective mobile terminal users from the priority database 25 and determine the handover destination radio access system. Therefore, the handover control equipment 320 can provide communication service in consideration of requests of mobile terminal users in multiaccess communication environment including radio access systems having various characteristics. For example, there are many types of radio access systems having different capabilities or fees together in the multiaccess communication environment.

### (Fourth Embodiment)

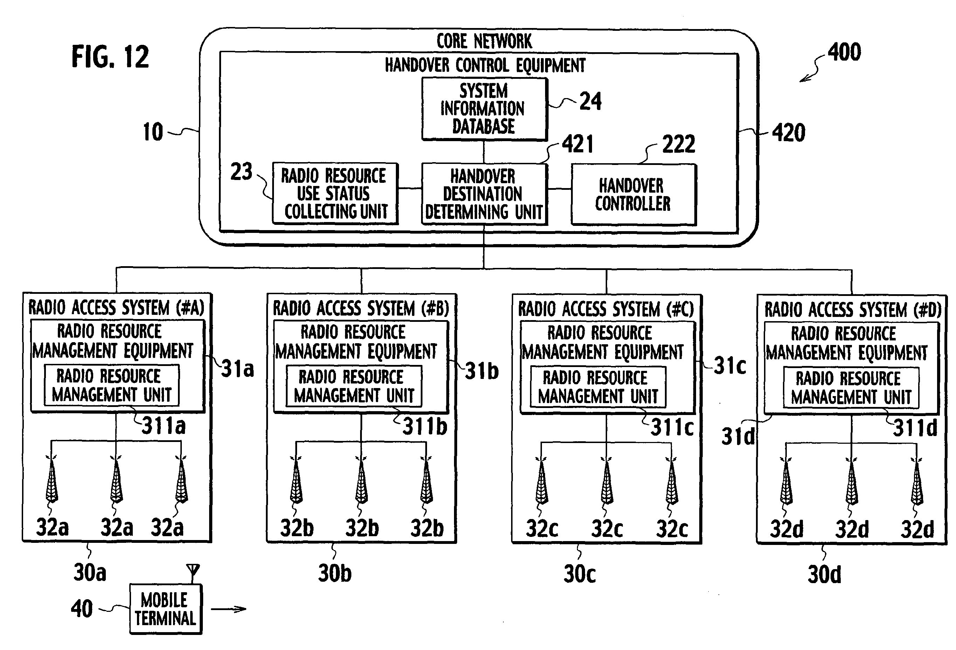

As shown in FIG 12, a mobile communication system 400 includes a handover control equipment 420, a plurality of radio access systems (#A) 30a, (B) 30b, (#C) 30c, and (#D) 30d, and a mobile terminal 40. The handover control equipment 420 includes a handover destination determining unit 421, a handover controller 222, a radio resource use status collecting unit 23, and a system information database 24. In FIG. 12, the same reference numerals are given to the substantially same parts as those of the mobile communication systems 100 and 200 shown in FIGS. 1 and 6, and repetitive descriptions thereof are thus omitted.

The handover destination determining unit 421 selects an available system in the same manner as the handover destination determining unit 21 shown in FIG. 1. The handover destination determining unit 421 then selects a radio access system capable of reserving required radio resources as a handover destination radio access system from available systems based on collected radio resource use statuses and required radio resources in handover destination candidate radio access systems in the same manner as the handover destination determining unit 21 shown in FIG. 1. The handover destination determining unit 421 notifies the handover controller 222 of the selected radio access system associated with the handover destination candidate notification.

The handover destination determining unit 421 may then receive failure of a reservation which is a notification notifying that the reservation is impossible from the handover controller 222. This case may occur when required radio resources may be reserved at a time when having selected a handover destination radio access system, however, radio resources of that radio access system are used by another mobile terminal at a time when actually reserving required radio resources. As a result, the required radio resources cannot be reserved.

In this case, the handover destination determining unit 421 instructs the radio resource use status collecting unit 23 to collect radio resource use statuses again. The handover destination determining unit 421 selects a radio access system capable of reserving required radio resources from available systems again as a handover destination radio access system based on the re-collected radio resource use statuses. The handover destination determining unit 421 then notifies the handover controller 222 of the determined radio access system associated with the handover destination candidate notification. Other than the above processing, the handover destination determining unit 421 operates in substantially the same manner as the handover destination determining unit 21 shown in FIG 1.

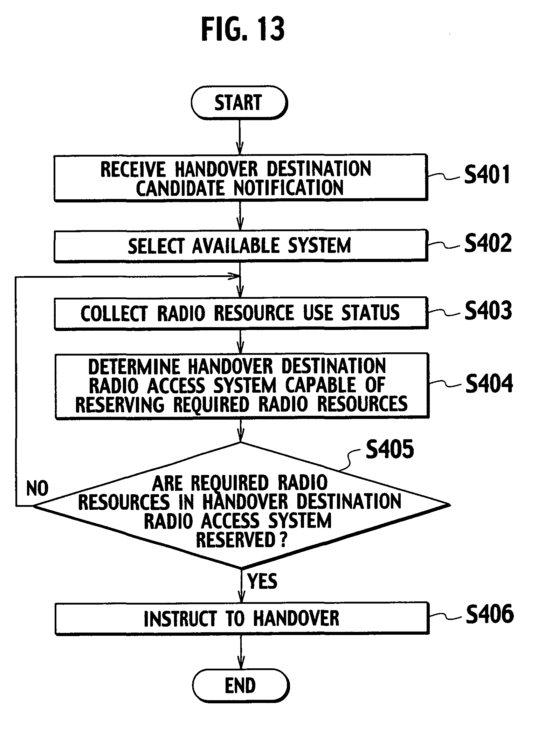

Next, a handover control method in a mobile communication system 400 is described using FIG. 13. The handover control equipment 420 carries out processing in steps (S401) through (S404) in the same manner as the processing in steps (S101) through (S104) shown in FIG 5. The handover control equipment 420 carries out processing in steps (S405) and (S406) in the same manner as the processing in steps (S204) and (S205) shown in FIG 7. In step (S405), when required radio resources cannot be reserved, processing returns to steps (S403) and (S404) in which the handover control equipment 420 then collects radio resource use statuses again, and selects a handover destination radio access system again. Processing then proceeds to step (S405) again in which the handover control equipment 420 then attempts to reserve required radio resources in the second handover destination.

According to the mobile communication system 400, the handover control equipment 420, and the handover control method, effects that handover can be controlled based on changes in radio resource use statuses may be provided in addition to effects obtained by the mobile communication systems 100 and 200 and the handover control equipments 20 and 220 using the handover control method shown in FIGS. 1 and 5 through 7. As a result, communication quality can be maintained further reliably.

### (Fifth Embodiment)

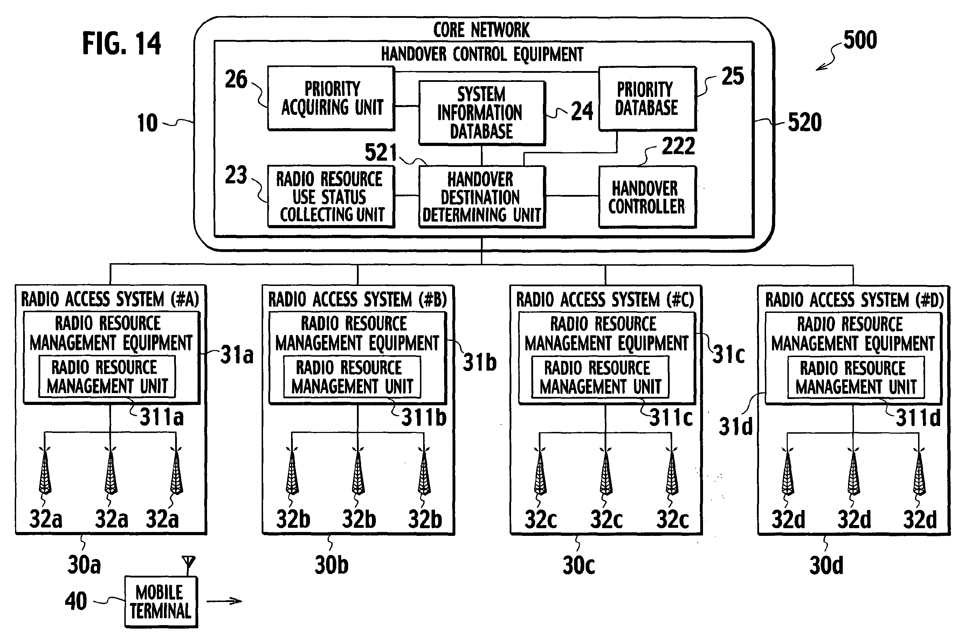

As shown in FIG 14, a mobile communication system 500 includes a handover control equipment 520, a plurality of radio access systems (#A) 30a, (B) 30b, (#C) 30c, and (#D) 30d, and a mobile terminal 40. The handover control equipment 520 includes a handover destination determining unit 521, a handover controller 222, a radio resource use status collecting unit 23, a system information database 24, a priority database 25, and a priority acquiring unit 26. In FIG 14, the same reference numerals are given to substantially the same parts as those of the mobile communication systems 100, 200, and 300 shown in FIGS. 1, 6 and 8, and repetitive descriptions thereof are thus omitted.

The handover destination determining unit 521 selects an available system in the same manner as the handover destination determining unit 21 shown in FIG. 1. The handover destination determining unit 521 then selects radio access systems capable of reserving required radio resources from available systems based on the collected radio resource use statuses of handover destination candidate radio access systems and required radio resources in the same manner as the handover destination determining unit 21 shown in FIG. 1.

The handover destination determining unit 521 then determines a handover destination radio access system from radio access systems capable of reserving required radio resources based on use priorities in the same manner as the handover destination determining unit 321 shown in FIG. 8. The handover destination determining unit 521 can determine a radio access system with the highest use priority for a communicating communication type presently used in the connecting system as the handover destination radio access system from radio access systems capable of reserving required radio resources. The handover destination determining unit 521 notifies the handover controller 222 of the determined handover destination radio access system associated with the handover destination candidate notification.

The handover destination determining unit 521 may then receive failure of a reservation which is a notification notifying that reservation is impossible from the handover controller 222. In this case, the handover destination determining unit 521 instructs the radio resource use status collecting unit 23 to collect radio resource use statuses again in the same manner as the handover destination determining unit 421 shown in FIG 12. The handover destination determining unit 521 then determines a handover destination radio access system again based on the re-collected radio resource use statuses, and notifies the handover controller 222 of the determined radio access system associated with the handover destination candidate notification again. Other than the above processing, the handover destination determining unit 521 operates in substantially the same manner as the handover destination determining unit 21 shown in FIG 1.

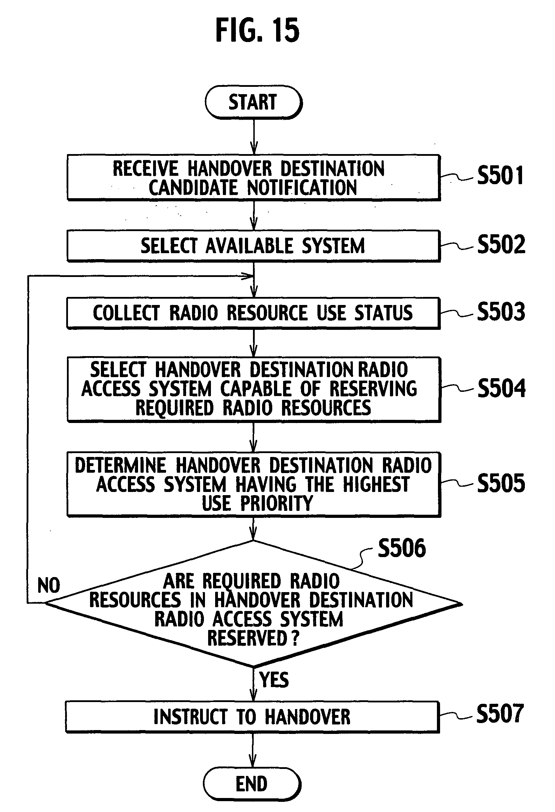

Next, a handover control method in a mobile communication system 500 is described using FIG 15. The handover control equipment 520 carries out processing in steps (S501) through (S503) in the same manner as the processing in steps (S101) through (S103) shown in FIG 5. The handover control equipment 520 then selects a radio access system capable of required radio resources for the communicating communication type presently used by the mobile terminal 40 from available systems based on radio resource use statuses and required radio resources (S504).

The handover control equipment 520 carries out processing in steps (S505) through (S507) in the same manner as the processing in steps (S303) through (S305) shown in FIG. 11. In step (S506), when required radio resources cannot be reserved, processing returns to steps (S503) through (S505) in which the handover control equipment 520 then collects radio resource use statuses again and determines a handover destination radio access system again. Processing then proceeds to step (S506) again in which the handover control equipment 520 then attempts to reserve required radio resources in the second handover destination.

According to the mobile communication system 500, the handover control equipment 520, and the handover control method, effects obtained by the mobile communication system 300 and the handover control equipment 320 using the handover control method shown in FIGS. 8 and 11 can be provided at the same time as when effects obtained by the mobile communication system 400 and the handover control equipment 420 using the handover control method shown in FIGS. 12 and 13 are provided.

### (Sixth Embodiment)

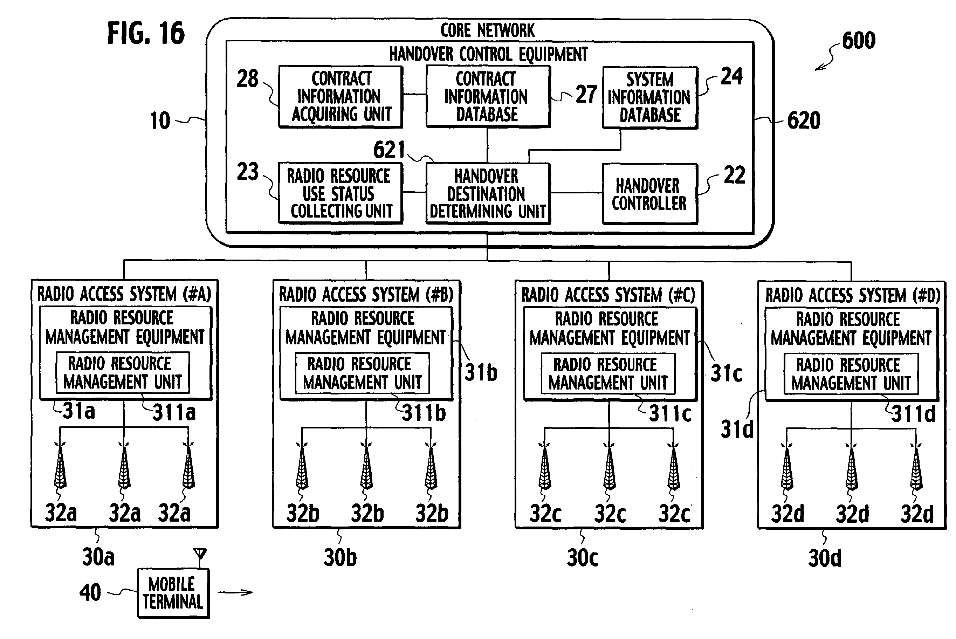

As shown in FIG. 16, a mobile communication system 600 includes a handover control equipment 620, a plurality of radio access systems (#A) 30a, (B) 30b, (#C) 30c, and (#D) 30d, and a mobile terminal 40. The handover control equipment 620 includes a handover destination determining unit 621, a handover controller 22, a radio resource use status collecting unit 23, a system information database 24, a contract information database 27, and a contract information acquiring unit 28. In FIG 16, the same reference numerals are given to substantially the same parts as those of the mobile communication system shown in FIG. 1, and repetitive descriptions thereof are thus omitted.

The contract information database 27 stores contract information which includes radio access systems available for the mobile terminal 40 and available communication types for the mobile terminal 40. A mobile terminal user contracts with a communication carrier who provides radio access systems in advance to get authorization to use a radio access system. A mobile terminal user may get authorization for respective communication types, or may get authorization for respective radio access systems. Contract information includes radio access systems available for the mobile terminal 40 and available communication types for the mobile terminal 40 by such contract. The contract information database 27 stores contract information for respective mobile terminal 40. For example, the contract information database 27 stores contract information associated with identification information of the mobile terminal 40 such as a user ID. The contract information acquiring unit 28 acquires contract information from an external input by a communication carrier, The contract information acquiring unit 28 stores the acquired contract information in the contract information database 27.

The handover destination determining unit 621 selects an available system in the same manner as the handover destination determining unit 21 shown in FIG. 1. The handover destination determining unit 621 acquires contract information from the contract information database 27 based on the identification information of the mobile terminal 40 included in the handover destination candidate notification. The handover destination determining unit 621 selects a radio access system available for the mobile terminal 40 from available systems based on the acquired contract information.

The handover destination determining unit 621 then determines a radio access system capable of reserving required radio resources as a handover destination radio access system from systems available for the mobile terminal 40 based on the radio resource use statuses collected from handover destination candidate radio access systems and required radio resources in the same manner as the handover destination determining unit 21 shown in FIG. 1. The handover destination determining unit 621 notifies the handover controller 22 of the determined handover destination radio access system associated with the handover destination candidate notification. Other than the above processing, the handover destination determining unit 621 operates in substantially the same manner as the handover destination determining unit 21 shown in FIG. 1.

As described above, since the handover control equipment 620 includes the contract information database 27 and the contract information acquiring unit 28, a core network 10 may manage radio access systems accessible and available for the mobile terminal 40. The handover destination determining unit 621 then determines a handover destination radio access system based on contract information. This allows the handover control equipment 620 to control handover appropriately in consideration of contract information.

Note that the handover control equipment 220 and 420 shown in FIGS. 6 and 12 may include the contract information database 27 and the contract information acquiring unit 28, respectively. This allows the handover destination determining units 221 and 421 to determine a handover destination radio access system based on contract information.

### (Seventh Embodiment)

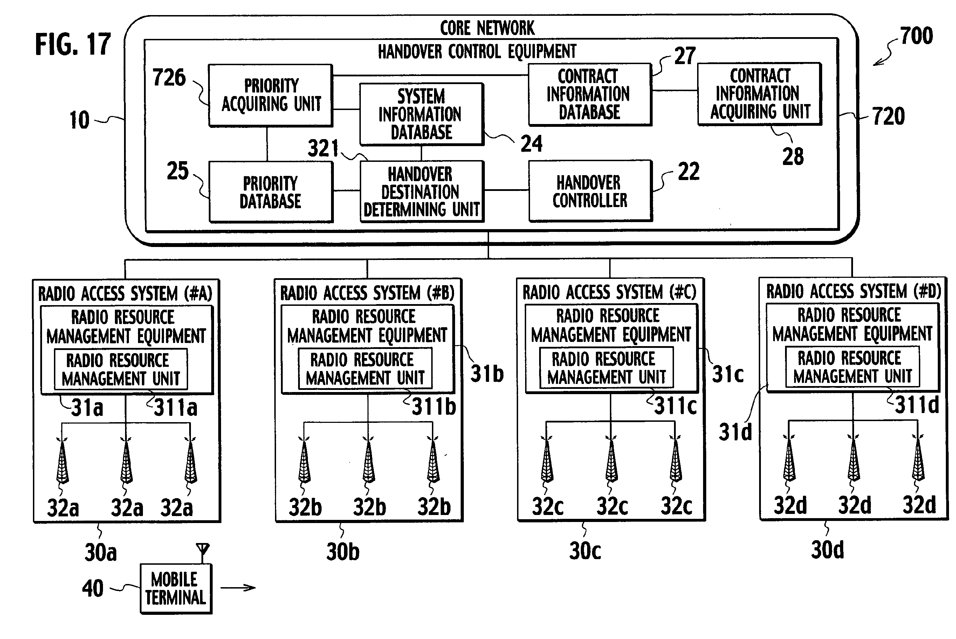

As shown in FIG 17, a mobile communication system 700 includes a handover control equipment 720, a plurality of radio access systems (#A) 30a, (B) 30b, (#C) 30c, and (#D) 30d, and a mobile terminal 40. The handover control equipment 720 includes a handover destination determining unit 321, a handover controller 22, a system information database 24, a priority database 25, a priority acquiring unit 726, a contract information database 27, and a contract information acquiring unit 28. In FIG. 17, the same reference numerals are given to substantially the same parts as those of the mobile communication systems 100, 300, and 600 shown in FIGS. 1, 8 and 16, and repetitive descriptions thereof are thus omitted.

When having acquired use priorities from the mobile terminal 40, the priority acquiring unit 726 acquires contract information from the contract information database 27 based on the identification information of the mobile terminal 40. The priority acquiring unit 726 determines whether or not radio access systems unavailable for the mobile terminal 40 exist in radio access systems and communication types for which use priorities are specified by the mobile terminal 40 based on the contract information.

The priority acquiring unit 726 prevents storage of use priorities for radio access systems and communication types unavailable for the mobile terminal 40 in the priority database 25 even when the mobile terminal 40 specifies the use priorities. When an undefined priority level develops due to that prevention, the priority acquiring unit 726 moves up use priorities, For example, in the case of the priority database 25 shown in FIG. 9, the priority acquiring unit 726 stores the symbol '×' in the radio access systems and communication types unavailable for the mobile terminal 40, and moves up the use priorities. In addition, the priority acquiring unit 726 may acquire contract information from the contract information database 27, and may provide to the mobile terminal 40 the contract information as a reference for the mobile terminal 40 to specify use priorities.

In such handover control equipment 720, the priority acquiring unit 726 may construct the priority database 25 in consideration of contract information. Therefore, the handover destination determining unit 321 may easily control handover in consideration of contract information using only use priorities stored in the priority database 25. Note that the handover control equipment 520 shown in FIG. 14 may include the contract information database 27, the contract information acquiring unit 28, and the priority acquiring unit 726.

### (Eighth Embodiment)

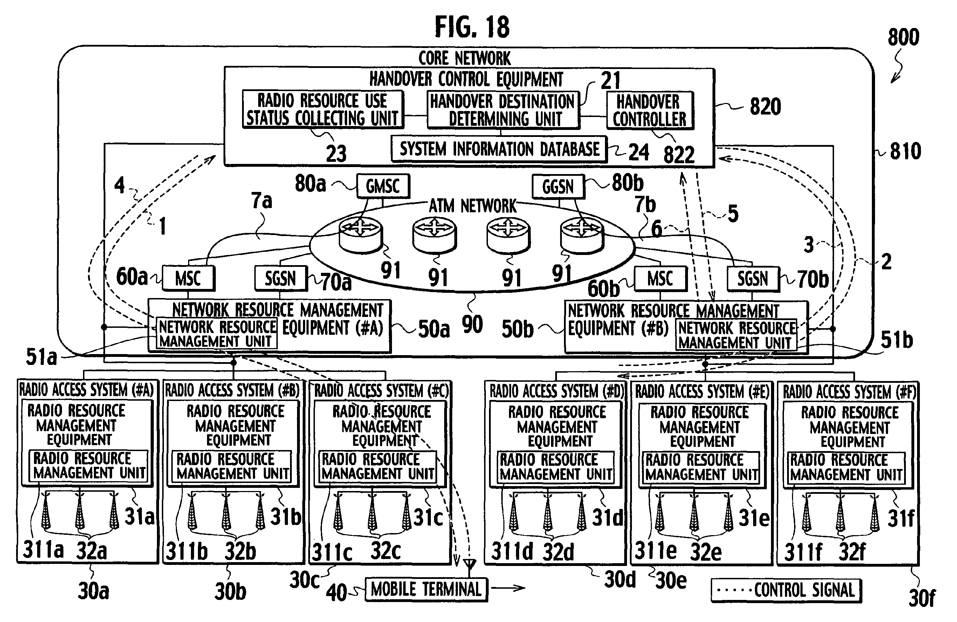

As shown in FIG 18, a mobile communication system 800 includes a handover control equipment 820, a plurality of network resource management equipments (#A) 50a and (#B) 50b, a plurality of radio access systems (#A) 30a, (#B) 30b, (#C) 30c, (#D) 30d, (#E) 30e, and (#F) 30f, and a mobile terminal 40. The handover control equipment 820 includes a handover destination determining unit 21, a handover controller 822, a radio resource use status collecting unit 23, and a system information database 24.

The radio access systems (#E) 30e and (#F) 30f include radio resource management equipments 31e and 31f, and base stations 32e and 32f, respectively. Then the radio resource management equipments 31e and 31f include the radio resource management units 311e and 311f, respectively. In FIG 18, the same reference numerals are given to substantially the same parts as those of the mobile communication system shown in FIG. 1, and repetitive descriptions thereof are thus omitted.

The network resource management equipments (#A) 50a and (#B) 50b are provided in a core network 810. The core network 810 includes a plurality of mobile switching centers (MSCs) 60a and 60b, a plurality of serving GPRS support nodes (SGSNs) 70a and 70b, a gateway MSC (GMSC) 80a, a gateway GPRS support node (GGSN) 80b, and an asynchronous transfer mode (ATM) network 90.

The MSC 60a is a circuit switching equipment on the radio access system side, which controls circuit switching communication with the mobile terminal 40 connected to the radio access systems (#A) 30a, (#B) 30b, and (#C) 30c. The MSC 60b is a circuit switching equipment on the radio access system side, which controls circuit switching communication with the mobile terminal 40 connected to the radio access systems (#D) 30d, (#E) 30e, and (#F) 30f. The GMSC 80a is a circuit switching equipment on the other network side which connects to other networks.

The SGSN 70a is a packet switching equipment on the radio access system side, which controls packet switching communication with the mobile terminal 40 connected to the radio access systems (#A) 30a, (#B) 30b, and (#C) 30c. The SGSN 70b is a packet switching equipment on the radio access system side, which controls packet switching communication with the mobile terminal 40 connected to the radio access systems (#D) 30d, (#E) 30e, and (#F) 30f. The GGSN 80b is a packet switching equipment on the other network side which connects to other networks.

The ATM network 90 is a transfer network for transferring between the GMSC 80a on the other network side and the MSCs 60a and 60b on the radio access system side, and between the GGSN 80b on the other network side and the SGSNs 70a and 70b on the radio access system side. The ATM network 90 includes a plurality of routers 91.

The network resource management equipments (#A) 50a and (#B) 50b manage network resources in the core network 810. The network resource management equipments (#A) 50a and (#B) 50b reserve network resources in the core network 810 required for handover to the handover destination radio access system based on an instruction to reserve network resources from the handover control equipment 820.

The network resource management equipment (#A) 50a manages network resources used by the mobile terminal 40 connected to the radio access systems (#A) 30a, (#B) 30b, and (#C) 30c. More specifically, the network resource management equipment (#A) 50a manages resources in the MSC 60a and the SGSN 70a and resources in the ATM network 90 for transferring data from the MSC 60a to the GMSC 80a and from the SGSN 70a to the GGSN 80b which are used by the mobile terminal 40 connected to the radio access systems (#A) 30a, (#B) 30b, and (#C) 30c.

The network resource management equipment (#B) 50b manages network resources used by the mobile terminal 40 connected to the radio access systems (#D) 30d, (#E) 30e, and (#F) 30f. More specifically, the network resource management equipment (#B) 50b manages resources in the MSC 60b and the SGSN 70b and resources in the ATM network 90 for transferring data from the MSC 60b to the GMSC 80a and from the SGSN 70b to the GGSN 80b which are used by the mobile terminal 40 connected to the radio access systems (#D) 30d, (#E) 30e, and (#F) 30f.

As described above, the network resource management equipment (#A) 50a accommodates the radio access systems (#A) 30a, (#B) 30b, and (#C) 30c. The network resource management equipment (#B) 50b accommodates the radio access systems (#D) 30d, (#E) 30e, and (#F) 30f. In addition, network resources include, for example, processing capabilities and data storage capacities of the MSCs 60a and 60b, the SGSNs 70a and 70b, and the ATM network 90.

The network resource management equipments (#A) 50a and (#B) 50b includes network resource management units 51a and 51b, respectively. The network resource management units 51a and 51b reserve network resources in a core network required for handover to a handover destination radio access system based on an instruction to reserve the network resources from the handover control equipment 820.

Upon reception of an instruction 5 from the handover control equipment 820 to reserve network resources, the network resource management units 51a and 51b reserve required network resources in the core network 810 for handover to the handover destination radio access system. More specifically, the network resource management units 51a and 51b receive an instruction to reserve network resources including a handover destination, a communicating communication type presently used by the mobile terminal 40, and a communication quality for the communicating communication type. For example, when the radio access system (#C) 30c is specified as a handover destination radio access system and voice call by circuit switching is specified as a communicating communication type, the network resource management unit 51a reserves resources in the MSC 60a and resources in the routers 91 along a transfer route from the MSC 60a to the GMSC 80a, and then sets a route 7a (network bearer) to transfer user data (voice data) of the mobile terminal 40 in the core network 810.

For example, when the radio access system (#D) 30d is specified as a handover destination radio access system, packet communication is specified as a communicating communication type, and allowable delay of the packet communication is specified, the network resource management unit 51b reserves resources in the SGSN 70b and resources in the routers 91 along a transfer route from the SGSN 70b to the GGSN 80b so as to satisfy the allowable delay, and then sets a route 7b (network bearer) to transfer user data of the mobile terminal 40 in the core network 810.

Once network resources are reserved according to an instruction, the network resource management units 51a and 51b transmit a reservation completion notification 6 to the handover control equipment 820.

The handover controller 822 instructs the network resource management equipments (#A) 50a and (#B) 50b to reserve network resources in the core network 810 required for handover to the handover destination radio access system.

More specifically, the handover controller 822 stores in advance information which are network resource management equipments and radio access systems related to network resources managed by the network resource management equipments. In other words, the handover controller 822 stores correspondence between each of the network resource management equipments and each of the radio access systems accommodated in the network resource management equipments (hereafter, referred to as 'correspondence information').

In the case of FIG. 18, the handover controller 822 stores the network resource management equipment (#A) 50a associated with the radio access systems (#A) 30a, (#B) 30b, and (#C) 30c, and the network resource management equipment (#B) 50b associated with the radio access systems (#D) 30d, (#E) 30e, and (#F) 30f as correspondence information. For example, the handover controller 822 can have a table including network resource management equipments associated with radio access systems as correspondence information.

The handover controller 822 determines whether or not the network resource management equipment that manages network resources used by the mobile terminal 40 can be switched by handover based on the presently connected radio access system, a determined handover destination radio access system, and the correspondence information. In other words, handover changes a route (network bearer) for user data transferred in the core network 810. At this time, the handover controller 822 determines whether or not a network resource management equipment reserving network resources due to that change, is switched.

For example, in a case where the mobile terminal 40 connects to the radio access system (#C) 30c, and the handover destination radio access system is the radio access system (#D) 30d, it is determined for a network resource management equipment accommodating radio access systems, that the network resource management equipment (#A) 50a is switched to the network resource management equipment (#B) 50b by handover.

On the other hand, in a case where the mobile terminal 40 connects to the radio access system (#C) 30c, and the handover destination radio access system is the radio access system (#B) 30b, it is determined that the network resource management equipment accommodating the radio access systems is not switched by handover, and remains with the network resource management equipment (#A) 50a.

Once having determined that a network resource management equipment is switched, the handover controller 822 instructs a network resource management equipment managing network resources, to reserve network resources in a core network 810 required for handover to the handover destination radio access system. More specifically, the handover controller 822 transmits an instruction 5 to reserve network resources to a switched destination network resource management equipment. For example, the handover controller 822 instructs by specifying a handover destination radio access system, communicating communication type presently used by the mobile terminal 40, and a communication quality for the communicating communication type.

The handover controller 822 receives a reservation completion notification 6 from the network resource management equipments 50a and 50b. In a case where the reservation result notification 3 from the radio resource management equipment indicates that radio resources can be reserved, and the reservation completion notification 6 is received, the handover controller 822 can confirm that both radio resources and network resources can be reserved. The handover controller 822 then instructs to handover to the selected handover destination radio access system.

Note that other than the above processing, the handover controller 822 operates in substantially the same manner as the handover controller 22 shown in FIG. 1. In addition, the instruction 5 to reserve network resources and the reservation completion notification 6 are transferred as control signal, which is indicated with dashed lines in FIG 18.

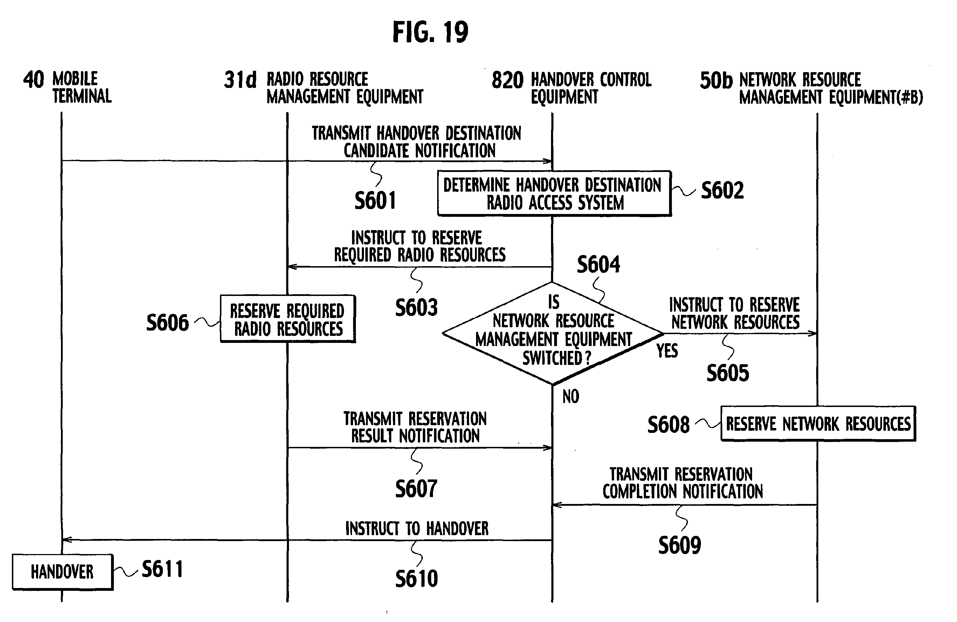

Next, a handover control method in a mobile communication system 800 is described using FIG 19. The mobile terminal 40 transmits a handover destination candidate notification 1 to the handover control equipment 820 (S601). The handover control equipment 820 determines a handover destination radio access system in the same manner as the processing in steps (S102) through (S104) shown in FIG 5 or the like (S602). A case of the radio access system (#D) 30d being determined as a handover destination radio access system is described below as an example.

The handover control equipment 820 instructs the radio resource management equipment 31d in the determined handover destination radio access system (#D) 30d to reserve required radio resources by transmitting an instruction 2 to reserve the required radio resources (S603). In addition, the handover control equipment 820 determines whether or not the network resource management equipment is switched by handover (S604).

When the mobile terminal 40 connects to the radio access system (#C) 30c, the handover control equipment 820 determines that the network resource management equipment (#A) 50a is switched to the network resource management equipment (#B) 50b by handover. The handover control equipment 820 then instructs the network resource management equipment (#B) 50b to reserve network resources by transmitting an instruction 5 to reserve network resources (S605).

When receiving the instruction, the radio resource management equipment 31d reserves required radio resources (S606), and then transmits a reservation result notification 3 to the handover control equipment 820 (S607). In addition, the network resource management equipment (#B) 50b reserves network resources, and sets a route 7b (network bearer) to transfer mobile terminal 40 of user data in the core network 810 (S608). The network resource management equipment (#B) 50b transmits a reservation completion notification 6 to the handover control equipment 820 (S609).

Upon confirmation from the reservation result notification 3 and the reservation completion notification 6 that both radio resources and network resources are reserved, the handover control equipment 820 transmits a switch instruction 4 to the mobile terminal 40 to instruct to hand over (S610). The mobile terminal 40 then carries out handover (S611).

Note that in step (S604), when the mobile terminal 40 is connected to the radio access system (#E) 30e, for example, the handover control equipment 820 determines that the network resource management equipment is not switched by handover. In this case, the handover control equipment 820 does not instruct the network resource management equipment (#B) 50b, and instructs to hand over when confirming that radio resources are reserved by receiving the reservation result notification 3 from the radio resource management equipment 31d (S610).

According to the mobile communication system 800, the handover control equipment 820, the network resource management equipments (#A) 50a and (#B) 50b, and the handover control method, not only radio resources required for handover, but network resources in the core network 810 can also be reserved. Therefore, the communication quality required for the communicating communication type used before and after handover can be maintained further reliably. In addition, the network resource management equipment (#A) 50a and (#B) 50b may contribute to the handover control equipment 820 controlling handover between different radio access systems in consideration of communication quality.

More specifically, the handover controller 822 can reserve network resources in the core network 810 by using the correspondence information which is network resource management equipments associated with radio access systems when a handover between different radio access systems is carried out.

Note that each of the mobile communication systems 200, 300, 400, 500, 600, and 700 shown in FIGS. 6, 8, 12, 14, 16, and 17 may include the network resource management equipments (#A) 50a and (#B) 50b provided in the core network 810. The handover control equipments 220, 320, 420, 520, 620, and 720 may perform the same operation as the handover controller 822 to instruct to reserve network resources. In addition, network resource types managed by the network resource management equipments are not limited. For example, resources in routers provided in the core network may also be managed.

### (Modified Example)

Although the inventions have been described above by reference to certain embodiments of the inventions, the inventions are not limited to the embodiments described above. Modifications and variations of the embodiments described above will occur to those skilled in the art, in light of the above teachings.

For example, the handover control equipments 20, 220, 320, 420, 520, 620, 720, and 820 may include a request fee database to store request fees of the mobile terminal user. In this case, the system information database 24 shown in FIG 2 stores fees for respective radio access systems and for respective communication types. The handover destination determining units 21, 221, 321, 421, 521, and 621 may determine a handover destination radio access system in consideration of fees by referring to the system information database 24 and the request fee database.

In addition, in the aforementioned embodiments, a case where communicating communication type is included in the handover destination candidate notification is described. Alternatively, the handover control equipments 20, 220, 320, 420, 520, 620, 720, and 820 may include a communication type database which includes a communicating communication type. The communication type database includes identification information of the mobile terminal 40 associated with the communicating communication type. For example, the handover controllers 22 and 222 may receive information of the communicating communication type associated with the mobile terminal identification information from radio access systems or the mobile terminal 40 at the time when the mobile terminal 40 starts communication or switches the communication type, and store and update it in the communication type database

In this case, it is unnecessary for the mobile terminal 40 to include the communicating communication type in the handover destination candidate notification. In addition, the handover destination determining units 21, 221, 321, 421, 521, and 621 may acquire the communicating communication type from the communication type database, instead of from the handover destination candidate notification.

## Claims

1. A handover control equipment, comprising:
a handover destination determining unit configured to determine a handover destination radio access system based on communication quality of a communicating communication type used in a radio access system to which a mobile terminal connects, radio resource use statuses of handover destination candidate radio access systems, and communication qualities of communication types provided by the handover destination candidate radio access systems; and
a handover controller configured to control handover to the handover destination radio access system.

2. The handover control equipment of Claim 1, further comprising:
a radio resource use status collecting unit configured to collect radio resource use statuses by instructing the handover destination candidate radio access systems to provide the radio resource use statuses, wherein
the handover destination determining unit determines the handover destination radio access system based on the radio resource use statuses.

3. The handover control equipment of Claim 1, wherein
the handover controller instructs the handover destination radio access system to reserve required radio resources for the communication quality of the communicating communication type, controls the handover to the handover destination radio access system when the required radio resources are reserved, and notifies the handover destination determining unit of failure of a reservation when the required radio resources are not reserved, and
the handover destination determining unit determines the handover destination radio access system again when receiving the failure of a reservation.

4. The handover control equipment of Claim 1, wherein the handover destination determining unit determines the handover destination radio access system based on use priorities of radio access systems for respective communication types specified by a mobile terminal user.

5. The handover control equipment of Claim 1, wherein the handover controller instructs a network resource management equipment managing network resources, to reserve network resources in a core network required for the handover to the handover destination radio access system.

6. A radio resource management equipment, comprising:
a radio resource management unit configured to manage radio resources by at least one of providing radio resource use statuses and reserving the radio resources based on at least one of an instruction to provide the radio resource use statuses and an instruction to reserve the radio resources from a handover control equipment controlling handover between different radio access systems.

7. A network resource management equipment, comprising:
a network resource management unit configured to reserve network resources in a core network required for handover to a handover destination radio access system based on an instruction to reserve the network resources from a handover control equipment controlling the handover between different radio access systems.

8. A mobile communication system, comprising:
a handover control equipment configured to determine a handover destination radio access system based on communication quality of a communicating communication type used in a radio access system to which a mobile terminal connects, radio resource use statuses of handover destination candidate radio access systems, and communication qualities of communication types provided by the handover destination candidate radio access systems, and control handover to the handover destination radio access system; and
a radio resource management equipment configured to manage radio resources by at least one of providing the radio resource use statuses and reserving the radio resources based on at least one of an instruction to provide the radio resource use statuses and an instruction to reserve the radio resources from the handover control equipment.

9. The mobile communication system of Claim 8, further comprising a network resource management equipment configured to reserve network resources in a core network required for the handover to the handover destination radio access system based on an instruction to reserve the network resources from the handover control equipment.

10. A handover control method, comprising:
determining a handover destination radio access system based on communication quality of a communicating communication type used in a radio access system to which a mobile terminal connects, radio resource use statuses of handover destination candidate radio access systems, and communication qualities of communication types provided by the handover destination candidate radio access systems; and
controlling handover to the handover destination radio access system.

11. The handover control method of Claim 10, further comprising reserving required radio resources for the communication quality of the communicating communication type in the handover destination radio access system.

12. The handover control method of Claim 10, further comprising reserving network resources in a core network required for the handover to the handover destination radio access system.
